Europäisches Patentamt

European Patent Office

Office européen des brevets

(11) Veröffentlichungsnummer: **0 271 714**
**A2**

## (12) EUROPÄISCHE PATENTANMELDUNG

(21) Anmeldenummer: 87116657.5

(22) Anmeldetag: 11.11.87

(51) Int. Cl.4: **H02K 5/14**

(30) Priorität: 11.11.86 DE 3638403

(43) Veröffentlichungstag der Anmeldung:
22.06.88 Patentblatt 88/25

(84) Benannte Vertragsstaaten:
AT BE CH DE ES FR GB GR IT LI LU NL SE

(71) Anmelder: SCHUNK Motorensysteme GmbH
Industriepark 7
D-2875 Ganderkesee 1(DE)

(72) Erfinder: Köster, Walter
Neddenhüser Strasse 49
D-2875 Ganderkesee 1(DE)

(74) Vertreter: Stoffregen, Hans-Herbert, Dr.
Dipl.-Phys. et al
Patentanwälte Strasse & Stoffregen
Salzstrasse 11a Postfach 2144
D-6450 Hanau/Main 1(DE)

(54) **Elektromotor mit Schalteinrichtung zur Drehrichtungsumkehr.**

(57) Es wird ein Elektromotor mit einer Schalteinrichtung (6) zur Drehrichtungsumkehr vorgeschlagen, wobei eine verschwenkbare Bürstenhalterplatte (10) vorgesehen ist, durch die sowohl das Ein-und Ausschalten als auch die Drehrichtungsumkehr ermöglicht wird.

FIG.1

## Elektromotor mit Schalteinrichtung zur Drehrichtungsumkehr

Die Erfindung bezieht sich auf einen Elektromotor umfassend einen Anker, einen wenigstens eine Wicklung und zwei Polschuhe aufweisenden Feldmagneten, wenigstens zwei Bürstenhalter, die auf einer konzentrisch zum Anker zu beiden Seiten einer zu den Polschuhen in etwa symmetrischen Null-Lage verschwenkbaren Bürstenhalterplatte angeordnet sind, und eine die elektrische Polung der Bürstenhalter gegenüber der Wicklung des Feldmagneten bestimmenden Schalteinrichtung zur Drehrichtungsumkehr des Elektromotors.

Bei für Links-und Rechtslauf gleichermaßen geeigneten Elektromotoren werden die Bürsten so angeordnet, daß die Umpolung des Magnetfeldes eines Ankerhorns dann erfolgt, wenn sich dieses unter einem Polschuh des Feldmagneten befindet. Durch Rückwirkung des Magnetfeldes des Ankers auf das Magnetfeld des Feldmagneten wird letzteres beeinflußt, und die neutrale Zone verschiebt sich um einen gewissen Winkelbetrag entgegen dem Drehsinn des Ankers. Zur Leistungsoptimierung und zur Verminderung der am Kollektor auftretenden Funken hat es sich bewährt, die Bürsten entgegen dem Drehsinn des Ankers um die Rotationsachse des Ankers zu verschwenken.

Abhängig von Konstruktion und Leistung eines Elektromotors hat sich bei Elektromotoren mit zweipoligem Feldmagnet eine Bürstenverdrehung in der Größenordnung von ± 25° ausgehend von der Null-Lage bewährt. Unter Null-Lage ist die eingangs beschriebene zu den Polen des Feldmagneten symmetrische Anordnung der Bürsten zu verstehen.

Zur Drehrichtungsumkehr eines Elektromotors ist es erforderlich, die relativ Polarität zwischen Anker und Feldmagnet umzukehren. Dies kann durch elektrische Umpolung des Anschlüsse des Ankers oder der Anschlüsse des Feldmagneten erfolgen. Bei Motoren mit zweipoligem Feldmagneten wird die Feldwicklung häufig geteilt, wobei an jedem Polschuh die Hälfte der Feldwicklung angeordnet ist. Bei dieser Anordnung ist es üblich, jeweils dem einen Anschluß jeder Teilwicklung mit der Versorgungsspannung des Elektromotors zu beaufschlagen und jeweils den zweiten Anschluß jeder Teilwicklung mit je einer der Bürsten zu verbinden. Es sind Elektromotoren dieser Bauart bekannt, welche eine Schalteinrichtung aufweisen, die eine Umpolung der Bürsten in bezug auf die Anschlüsse des geteilten Feldmagneten bewirkt. Eine derartige Schalteinrichtung weist zwei einpolige Wechselschalter auf, welche jede der beiden Bürsten wahlweise mit einem der beiden Anschlüsse des geteilten Feldmagneten verbinden, wobei die beiden Schalter gegenseitig so verriegelt sind, daß Fehlschaltungen vermieden werden.

Aufgabe der vorliegenden Erfindung ist es, einen mit einer Einrichtung zur Bürstenverdrehung in Form einer verschwenkbaren Bürstenhalterplatte versehenen Elektromotor, welcher außerdem eine Schalteinrichtung zur Drehrichtungsumkehr aufweist, so zu gestalten, daß zusätzlich die Möglichkeit besteht, Ein-/Auszuschalten, daß eine Fehlbedienung ausgeschlossen ist und daß sowohl die Herstellung der Einzelteile als auch die Montage des Motors fertigungstechnisch vereinfacht und der Ausschuß reduziert wird.

Erfindungsgemäß wird diese Aufgabe dadurch gelöst, daß die Schalteinrichtung gemeinsam mit der Bürstenhalterplatte in Abhängigkeit von deren Lage in bezug auf die Null-Lage betätigbar ist. Wesentliches Merkmal der Erfindung ist es, daß die Bürstenhalterplatte den Schalter betätigt und gleichzeitig Bestandteil des Schalters ist. Folgende Funktionen werden von der Bürstenhalterplatte mit übernommen: Gehäuse, Betätigung und Aufnahme der Schaltkontakte. Auf diese Weise wird erreicht, daß elektrische Polung und mechanische Verschwenkung der Bürsten einander stets zugeordnet sind, und daß eine unbeabsichtigte Inbetriebnahme bei nicht mit der Polung übereinstimmender Verdrehung der Bürsten ausgeschlossen ist. Somit ist es unmöglich, daß bei einer beispielsweise für Linkslauf eines Motors optimalen Bürstenstellung eine Polung der Bürsten für Rechtslauf vorgenommen wird und der Motor in diesem Zustand betrieben wird, in dem starkes Bürstenfeuer auftritt und Kollektor sowie Bürsten starkem Verschleiß unterliegen.

Besonders hervorzuhebende Vorteile der Erfindung sind darin zu sehen, daß sich eine kompakte Bauweise durch das Anordnen des Schalters im Bereich der Bürstenhalterplatte ergibt. Gleichzeitig ist durch die in diesem Bereich strömende Luft eine hohe Sauberkeit gegeben, gleichwenn unmittelbar beim Schalter die Kohle abgerieben wird.

Die erfindungsgemäße Vorrichtung hat weiterhin den Vorteil, daß mit einem einzigen Handgriff die Bürsten sowohl verdreht als auch richtig gepolt werden. Zur Betätigung wird die gesamte Bürstenhalterplatte, die konzentrisch zur Rotationsachse des Ankers gelagert ist, verschwenkt. Auf der Bürstenhalterplatte sind elektrisch mit den die Bürsten führenden Bürstenhaltern verbundene Kontakte angeordnet, welche über bewegliche Schaltelemente mit am Gehäuse des Elektromotors angeordneten Festkontakten verbindbar sind. Die Betätigung der Schaltelemente erfolgt durch Wechselwirkung dieser mit während der Schwenkbewegung von der Bürstenhalterplatte an die Schaltelemente herangebrachten Einwirkungselementen wie Schaltnocken und dergleichen.

Bei einem als Hauptstrommotor geschalteten Elektromotor mit geteilter Feldwicklung sind die dem Gehäuse zugeordneten Festkontakte jeweils mit einem Anschluß einer Spule des Feldmagneten verbunden, deren zweiter Anschluß jeweils mit einer der beiden Zuleitungen zum Motor verbunden ist. Es versteht sich von selbst, daß bei einem Hauptstrommotor mit einer einzigen Feldwicklung diese einerseits mit einer der Zuleitungen und andererseits mit einem der Festkontakte verbunden ist und daß der zweite Festkontakt mit der zweiten Zuleitung verbunden ist. Bei einem Elektromotor mit Nebenschlußcharakteristik sind Ankerstromkreis und Feldmagnet elektrisch parallel zu schalten.

Ein zusätzlicher Ausschalter für den Elektromotor ist entbehrlich, wenn der Schaltmechanismus in seiner Bewegungscharakteristik wie folgt ausgeführt ist. Bei dieser Anordnung stellen die Schaltelemente vorzugsweise erst gegen Ende der Schwenkbewegung der Bürstenhalterplatte die elektrischen Verbindungen her, so daß umgekehrt bei einer leichten Rückwärtsbewegung aus der Endlage der Bürstenplatte bereits eine Unterbrechung des Stromkreises erfolgt. Bei dieser Anordnung dienen die Schaltelemente sowohl als Ein-, Aus-und Umpol-Schalter.

Wenn die Schalteinrichtung wenigstens ein mit Federkraft beaufschlagtes Schaltelement aufweist, das beim Umschalten eine instabile Zwischenphase durchläuft, dann werden beim Umpolen auftretende Induktionsfunken gelöscht. Nach Verlassen der instabilen Zwischenphase bewegt sich das Schaltelement so rasch, daß ein Funken innerhalb kürzester Zeit abreißt.

Besonders günstig ist es, wenn jedes Schaltelement einen Flachkontakt, eine Kontaktwippe, ein drehbar gelagertes Federelement und zwei Gegenkontakte aufweist, wobei die Kontaktwippe um eine Seitenkante des Flachkontaktes kippbar ist, das Federelement die Kontaktwippe klammerartig umfaßt und auf dem Flachkontakt lagefixiert und die Kontaktwippe über einen Abschnitt des Federelementes betätigbar ist, wobei die Gegenkontakte und der Flachkontakt relativ zueinander verschwenkbar angeordnet sind. ·

Im Ruhezustand bei unterbrochenem Stromkreis liegt die Kontaktwippe auf dem Flachkontakt auf, so daß ein Arm der Wippe einen Gegenkontakt nicht berühren kann. Außerdem liegt der Flachkontakt von dem Schaltwinkel (vorzugsweise 25°) entfernt.

Während des Umschaltens wird eine instabile Zwischenphase durchlaufen, weil die Kontaktwippe beim Verschwenken der Bürstenhalterplatte mit einer Betätigungsfeder betätigt ist, welche die Kontaktwippe auf den Flachkontakt und in gekipptem Zustand zusätzlich auf Gegenkontakte aufdrückt. Während die Betätigungsfeder die Kontaktwippe im Ruhezustand zentral auf den Flachkontakt aufdrückt, wird die Betätigungsfeder zum Kippen der Kontaktwippe über eine Kante des Flachkontaktes unter Anspannung zur Seite bewegt und erreicht nach Umkippen der Kontaktwippe wieder eine stabile Lage.

Die Feder kann so ausgeführt sein, daß sie die Kontaktwippe selbsttätig zurückschaltet oder es kann ein zusätzlicher Mechanismus vorgesehen werden, z.B. durch eine zweite Feder.

Bei dieser Ausführungsform ist vorteilhafterweise die Betätigungsfeder benachbart zum Flachkontakt symmetrisch zu diesem auf dessen von der Kontaktwippe abgewandten Seite parallel zu Kippkante drehbar gelagert. Dadurch kann die Feder in der Mitte des Flachkontaktes eine stabile Lage annehmen und je eine weitere auf jeder Seite des Flachkontaktes nach Einnahme einer dessen Kante überschreitenden seitlichen Lage.

Für die Funktion des Schaltelementes ist es prinzipiell gleichgültig, ob der Flachkontakt als Festkontakt ausgebildet und am Gehäuse des Elektromotors angeordnet ist oder ob der Flachkontakt auf der schwenkbaren Bürstenhalterplatte angeordnet ist. Bevorzugt wird die Ausführung, bei der der Flachkontakt eines Schaltelementes jeweils mit einem der Anschlüsse der Wicklung des Feldmagneten verbunden ist und der Gegenkontakt jeweils über ein Leiterelement mit einem der Bürstenhalter verbunden ist. Dabei werden die Schaltelemente über an der Bürstenhalterplatte angeordnete Betätigungselemente wie Stifte oder Nocken kurz vor erreichen der Endlage der Schwenkbewegung bzw. kurz nach Verlassen der Endlage betätigt.

Es kann auch ein Funkenstörungsglied wie Drossel direkt zwischen Schaltelement und Bürstenhalter angeordnet sein. Die Betätigung der Schaltelemente kann durch benachbart zu den Festkontakten angeordnete Schaltnocken erfolgen, so daß unabhängig von der Drehrichtung der - schwenkbaren Bürstenhalterplatte jeweils die Betätigung des Schaltelements in gleicher Richtung erfolgt.

Gegebenenfalls kann auch eine Drossel zwischen Feldanschluß und Mittelkontakt liegen.

Die Kontaktwippe kann grundsätzlich ein-oder zweiarmig ausgeführt sein, einarmig dann, wenn nach der erfindungsgemäßen Grundidee nur ein-und ausgeschaltet werden soll. Da die Gegenkontakte beim Verschwenken der Bürstenhalterplatte in den Wirkungsbereich des Kontaktarmes gelangen, kann grundsätzlich ein einziger Kontaktarm abwechselnd mit zwei verschiedenen Gegenkontakten verbunden sein. Eine besonders vorteilhafte symmetrische Ausführung wird dann erreicht, wenn die Kontaktwippe zweiarmig in V-Form ausgebildet ist und einen auf dem Flachkontakt abstützenden U-förmig ausgebildetem Auflagebereich aufweist, der zur Führung der Kontaktwippe sich zumindest abschnittweise seitlich entlang des Flachkontaktes erstreckt. Der U-förmige Auflagebereich führt die Kontaktwippe auf dem Flachkontakt und zentriert somit bei jedem Schaltvorgang die Kontaktwippe erneut. Auch bei einer einarmigen Ausführung der Kontaktwippe ist es empfehlenswert, einen U-förmigen Auflagebereich vorzusehen.

Gleichzeitig mit der Schwenkung der Bürstenhalterplatte kann die Leistung eines Elektromotors geregelt werden, wenn ein Abschnitt der Gegenkontakte als ein von der Kontaktwippe beschleifbares Widerstandselement ausgebildet ist, dessen zwischen Leiterelement und Kontaktwippe wirksame Länge durch Schwenken der Bürstenhalterplatte veränderbar ist. Die volle Motorleistung wird erreicht, wenn bei voller Ausschwenkung der Bürstenhalterplatte die Kontaktwippe mit dem jeweils der Polung entsprechenden Leiterelement und somit dem zugeordneten Bürstenhalter direkt verbunden ist. Die Betätigung dieses Schaltelementes erfolgt bereits kurz nach Verlassen der Null-Lage der Bürstenhalterplatte, so daß die Stromzufuhr über das Widerstandselement erfolgt. Bei weiterem Schwenken der Bürstenhalterplatte wird die wirksame Länge des Widerstandselementes und somit dessen elektrischer Widerstand immer geringer, bis in der Endlage ein direkter Kontakt zwischen Kontaktwippe und Leiterelement hergestellt ist. Das zweite der Umpolung dienende Schaltelement kann während des Schwenkens direkt auf der Leiterbahn - schleifen, da als Vorwiderstand ein einziges Widerstandselement im Stromkreis genügt.

Eine besonders elegante Leistungsregelung des Elektromotors wird dadurch erreicht, daß jeweils zwischen dem Leiterelement und dem zugeordneten Bürstenhalter ein die Motorleistung beeinflussendes Steuerelement wie Triac angeordnet ist, wobei das Widerstandselement jeweils im Steuerstromkreis des Steuerelementes angeordnet ist. Die Steuerelementes selbst können auf der Bürstenhalterplatte angeordnet sein, wobei sie gleichzeitig der Kühlluft ausgesetzt sind. Die Steuerelemente können über eine flexible Litze mit den Anschlüssen der Feldmagnetwicklungen verbunden sein, so daß nicht die gesamte dem Motor zugeführte elektrische Leistung über Schleifkontakte geführt werden muß, sondern nur die geringe Leistung der Steuerstromkreise. Die Leistungsregelung kann dann vorteilhafterweise über Kohleschichtwiderstände erfolgen.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachstehenden Beschreibung von in der Zeichnung dargestellten bevorzugten Ausführungsbeispielen.

Es zeigen:

Fig. 1 eine schematische Darstellung der erfindungsgemäßen Vorrichtung,

Fig. 2 in perspektivischer Ansicht schematisch ein Ausführungsbeispiel der erfindungsgemäßen Vorrichtung,

Fig. 3 in Draufsicht im Detail ein Schaltelement aus Fig. 2 im Ruhezustand,

Fig. 4 das Schaltelement aus Fig. 3 im geschalteten Zustand,

Fig. 5 das Schaltelement aus Fig. 2 in perspektivischer Darstellung.

Fig. 6 in perspektivischer Darstellung - schematisch ein zweites Ausführungsbeispiel einer erfindungsgemäßen Vorrichtung und

Fig. 7 eine Merkmale, die im Zusammenhang mit der Fig. 2 beschrieben werden, verdeutlichende perspektivische Darstellung.

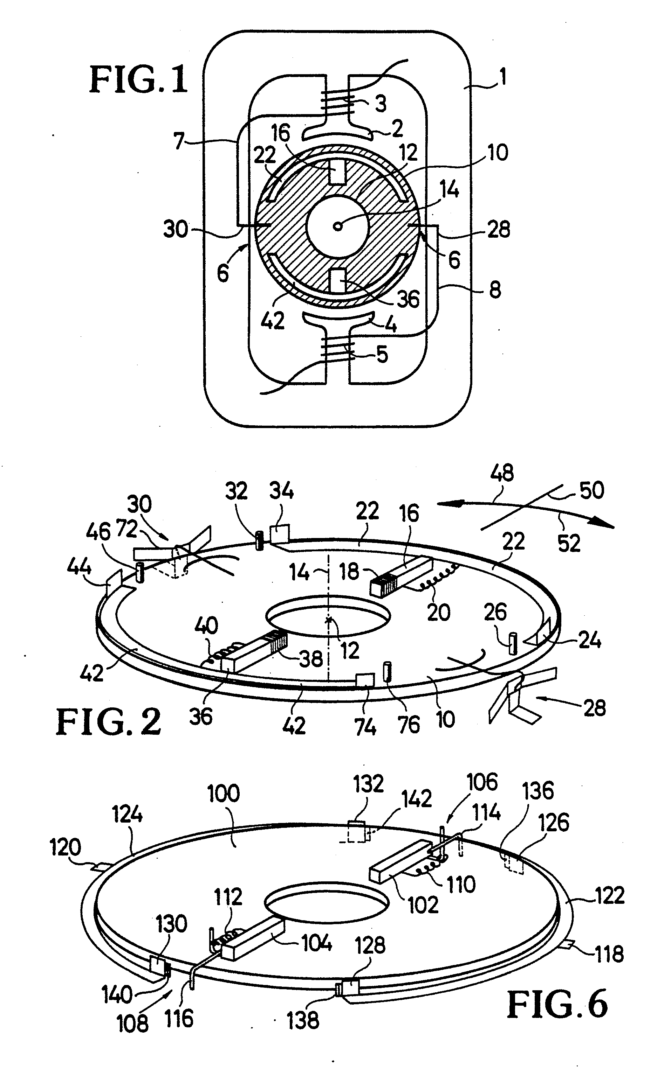

In Fig. 1 ist ein Elektromotor mit einem Gehäuse (1) und zwei Polschuhen (2) und (4) dargestellt, welche jeweils eine Hälfte einer Feldwicklung (3) und (5) aufweisen. Jeweils ein Anschluß - (7), (8) einer Feldwicklung (3), (5) ist mit einem am Gehäuse (1) angeordneten Schaltelement (28), (30) einer Schalteinrichtung (6) verbunden. Auf einer um eine Achse (14) des Elektromotors - schwenkbaren Bürstenhalterplatte (10) sind einander diametral gegenüberliegend zwei Bürstenhalter (16) und (36) angeordnet, welche mit je einem Leiterelement (22) bzw. (42) verbunden sind. Die Leiterelemente (22) und (42) sind als Abschnitte eines Ringes ausgebildet, welche in der Nähe der Schaltelemente (28) und (30) enden. Beim Schwenken der Bürstenhalterplatte (10) um die Achse (14) stellt das Schaltelement (28) eine Verbindung zwischen dem Anschluß (8) und dem Leiterelement (22) bzw. (42) her, und das Schaltelement (30) stellt eine elektrische Verbindung zwischen dem Anschluß (7) und dem Leiterelement (42) bzw. (22) her.

In Fig. 2 ist perspektivisch die schwenkbare Bürstenhalterplatte (10) mit den Bürstenhaltern (16) und (36) dargestellt, welche je eine Bürste (18) bzw. (38) führen und über im Inneren angeordnete Federelemente an einem hier nicht dargestellten Kollektor eines Ankers des Elektromotors andrücken. Auf der schwenkbaren Bürstenhalterplatte (10) sind mit dem Bürstenhalter (16) über eine Funkentstörungsdrossel (20) und ein als Verbindungsleitung zu bezeichendes Leiterelement (22) verbundene Kontaktlaschen (24) und (34) angeordnet. Diesen diametral gegenüberliegend sind über eine Funkentstörungsdrossel (40) und eine Verbindungsleitung (42) mit dem Bürstenhalter (38) verbundene Kontaktlaschen (44) und (74) angeordnet. In einer durch eine Linie (50) angedeuteten Null-Lage der Bürstenhalter (16) und (36) sind diese dem Kollektor so zugeordnet, daß die Umpolung eines Ankerhornes dann stattfindet, wenn sich dieses genau in der Mitte eines Polschuhes des Feldmagneten des Motors befindet. Zur Kompensation der Feldverzerrung des Feldmagneten durch das Ankerfeld und die dadurch hervorgerufene Verschiebung der neutralen Zone sind die Bürstenhalter (16) und (36) gemeinsam mit der Bürstenhalterplatte (10) zu beiden Seiten der Null-Lage (50) in Richtung eines Pfeiles (48) bzw. eines Pfeiles (52) schwenkbar. Die Schwenkbewegung erfolgt jeweils entgegen der Drehrichtung des Ankers.

Am äußeren Umfang der schwenkbaren Bürstenhalterplatte (10) sind einander diametral gegenüberliegend als Schalter (28) und (30) zu bezeichnende, die Polung der Bürsten bestimmende Schaltelemente angeordnet, welche mechanisch mit dem Gehäuse des Elektromotors verbunden sind und demzufolge den Polschuhen des Feldmagneten zugeordnet sind. Jeder Polschuh des Feldmagneten weist eine eigene Feldwicklung auf, deren einer Anschluß jeweils mit einem der Schalter (28) bzw. (30) verbunden ist und deren anderer Anschluß jeweils mit einer Ader eines Anschlußkabels des Elektromotors verbunden ist. Die Schalter (28) und (30) und die Kontaktlaschen (24, 34; 44, 74) sind so angeordnet, daß nach Schwenken der Bürstenhalterplatte (10) in Richtung des Pfeiles (52) der Schalter (28) mit der als Gegenkontakt dienenden Kontaktlasche (24) und der Schalter (30) mit der Kontaktlasche (44) in Verbindung steht. Wird die Bürstenhalterplatte (10) aus der Null-Lage (50) in Richtung des Pfeiles (48) geschwenkt, so wird über den Schalter (28) eine Verbindung zur Kontaktlasche (74) und über den Schalter (30) eine Verbindung zur Kontaktlasche (34) hergestellt. Auf diese Weise werden je nach Schwenkrichtung der Bürstenhalterplatte (10) die darauf angeordneten Bürstenhalter (16) und (36) mit den Bürsten (18) bzw. (38) mit den der Drehrichtung des Ankers entsprechenden Anschlüssen der Feldmagnetwicklungen verbunden, wobei eine Umpolung zur Drehrichtungsumkehr automatisch stattfindet.

Die Betätigung der Schalter erfolgt kurz vor Erreichen des Endpunktes der Schwenkbewegung durch je einen benachbart zu jeder der Kontaktlaschen (24, 34, 44, 74) angeordneten Kontaktstift (26, 32, 46, 76). Mittels dieser Kontaktstifte werden die Schalter (28) bzw. (30) betätigt, sobald eine der Kontaktlaschen (24, 74 bzw. 34, 44) in deren Wirkungsbereich geschwenkt ist.

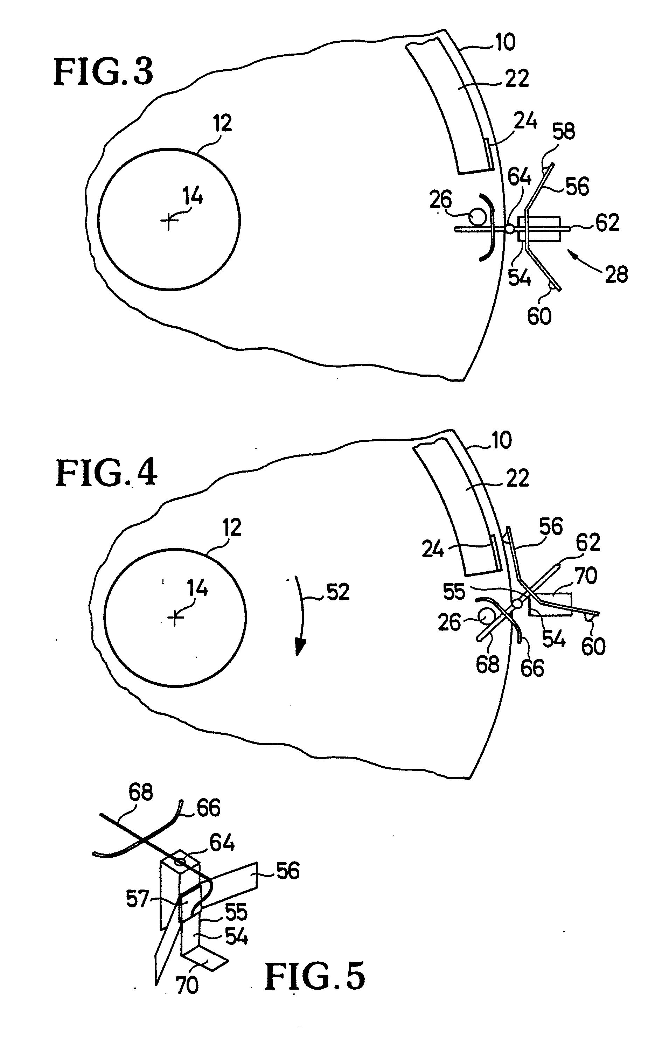

Die Anordnung und Funktionsweise der Schalter (28) und (30) werden anhand der Fig. 3 bis 5 am Beispiel des Schalters (28) beschrieben, dessen Beschreibung für den identisch aufgebauten Schalter (30) gleichermaßen gilt. Der Schalter (28) ist über eine als Anschluß dienende Grundplatte (70) mit einem Ende einer Feldwicklung eines Polschuhes des Elektromotors verbunden. Die sich radial zur Achse (14) hin länglich erstreckende Grundplatte (70) weist an ihrem der Achse (14) zugewandten Ende einen senkrecht abgebogenen Flachkontakt (54) auf, der parallel zur Achse (14) angeordnet ist. Auf dem Flachkontakt (54) ist eine zweiarmige V-förmige Schaltwippe (56) beweglich angeordnet. Zwischen beiden Armen weist die Schaltwippe (56) einen dem Flachkontakt (54) angepaßten Abschnitt auf. Mittels einer Betätigungsfeder (62) wird die Kontaktwippe (56) auf den Flachkontakt (54) aufgedrückt. In Richtung zur Achse (14) hin ist die Betätigungsfeder (62) benachbart zum Flachkontakt (54) in einem Drehpunkt (64) drehbar gelagert, so daß die Betätigungsfeder (62) den Flachkontakt (54) und die Kontaktwippe (56) klammerartig umgreift.

In radialer Richtung zur Achse (14) hin erstreckt sich ein Abschnitt (68) der Betätigungsfeder (62). Im Drehpunkt (64) ist eine haarnadelförmige Ausbiegung der Betätigungsfeder (62) in einer Bohrung gelagert. Bei Schwenkung der Bürstenhalterplatte (10) in Richtung des Pfeiles (52) berührt der Betätigungsstift (26) kurz vor Beendigung der Schwenkbewegung den Abschnitt (68) der Betätigungsfeder (62), wie in Fig. 3 dargestellt. Bei weiterem Schwenken der Bürstenhalterplatte (10) in Richtung des Pfeiles (52) führt die Betätigungsfeder (62) eine Drehbewegung um den Drehpunkt (64) aus. Dabei gleitet die Betätigungsfeder (62) auf dem mittleren Abschnitt der Kontaktwippe (56) entlang, bis sie eine Position seitlich des Flachkontaktes (54) erreicht. Entsprechend der geometrischen Zuordnung von Betätigungsstift (26) und Kontaktlasche (24) ist in diesem Zustand die Kontaktlasche (24) benachbart zu dem Arm der V-förmigen Kontaktwippe, welche von der Betätigungsfeder (62) in Richtung zur Achse (14) hin gezogen wird. Die Kontaktwippe (56) kippt nun so lange, bis sie mit einem Kontakt (58) die Kontaktlasche (24) berührt. Am Ende dieser Schaltbewegung nimmt die Kontaktwippe (56) gegenüber der Betätigungsfeder (62) wieder eine stabile Lage ein, die in Fig. 4 dargestellt ist.

Gleichzeitig ist über den Schalter (30) eine Verbindung zur Kontaktlasche (44) hergestellt. Somit ist der elektrische Stromkreis geschlossen und der Anker des Elektromotors kann sich entgegen der Pfeilrichtung (52) drehen.

Zum Ausschalten des Motors wird die Bürstenhalterplatte (10) entgegen der Pfeilrichtung (52) wieder in die Null-Lage (50) zurückgeschwenkt. Zu Beginn der Schwenkbewegung tritt der Betätigungsstift (26) in Wechselwirkung mit einem Greifbügel (66), der mit der Betätigungsfeder (62) verbunden ist. Dadurch wird die Betätigungsfeder (62) wieder in Mittellage zum Flachkontakt (54) bewegt und nimmt dabei die Kontaktwippe (56) mit. Nach Erreichen der Mittellage der Feder (62) gleitet der Kontaktstift (26) am Greifbügel (66) vorbei, so daß der Kontaktstift sich ohne weitere Beeinflussung des Schalters (28) von diesem entfernen kann. Bei Verdrehung der Bürstenhalterplatte (10) in Richtung des Pfeiles (48) tritt der Kontaktstift (56) in Wechselwirkung mit der Betätigungsfeder (62), so daß spiegelbildlich zu den eben beschriebenen Vorgängen nunmehr der zweite Kontaktarm der Kontaktwippe (56) über einen Kontakt (60) mit der Kontaktlasche (54) verbunden ist. Entsprechend ist in diesem Schaltzustand der Schalter (30) mit der Kontaktlasche (34) verbunden.

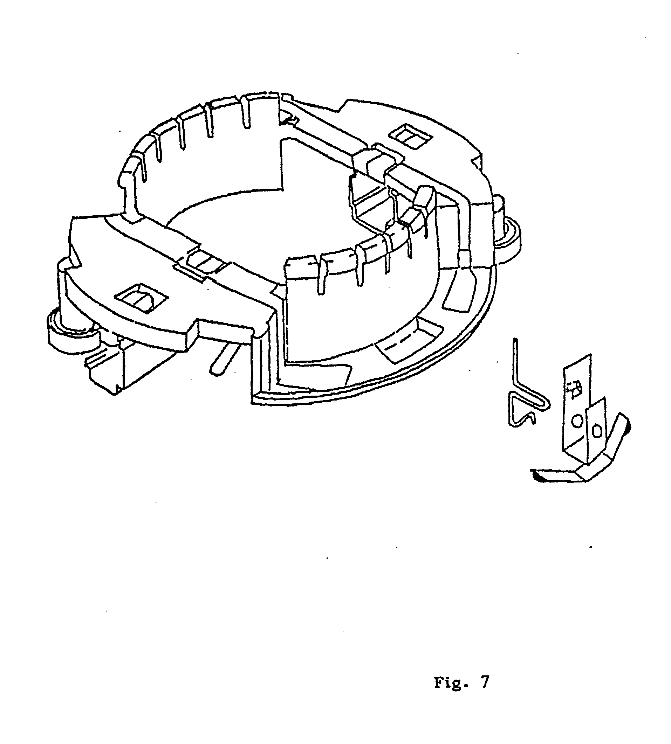

Fig. 6 zeigt ein weiteres Ausführungsbeispiel der erfindungsgemäßen Vorrichtung. Bei dieser Ausführungsform sind auf einer drehbaren Bürstenhalterplatte (100) einander gegenüberliegend Bürstenhalter (102) und (104) angeordnet. Benachbart zu den Bürstenhaltern (102) und (104) sind Schalter (106) und (108) angeordnet, welche elektrisch über Funkenstördrosseln (110) und (112) mit den Bürstenhaltern (102) bzw. (104) verbunden sind. Die sich mit der - schwenkbaren Bürstenhalterplatte (100) bewegenden Schalter (106) und (108) weisen über den Umfang der Bürstenhalterplatte (100) hinausragende Abschnitte von Betätigungsfedern (114) bzw. (116) auf.

Je ein Ende jeder Feldwicklung ist über einen Anschluß (118) bzw. (120) mit einer Verbindungsleitung (122) bzw. (124) verbunden. Die Verbindungsleitungen (122) bzw. (124) sind kreisbogenförmig am äußeren Umfang der schwenkbaren Bürstenhalterplatte (100) entlang bis in die Nähe der Schalter (106) bzw. (108) geführt. Beim Schwenken der Bürstenhalterplatte (100) gelangen die Schalter (106) bzw. (108) in den Bereich der Enden der Verbindungsleitungen (122) bzw. (124). An ihren Enden trägt die Verbindungsleitung (122) Kontaktlaschen (126) und (128), die Verbindungsleitung (124) trägt Kontaktlaschen (130) und (132). Benachbart zu den Kontaktlaschen (126, 128) bzw. (130, 132) sind Betätigungsnocken (136, 138) bzw. (140, 142) angeordnet, welche in Wechselwirkung mit den Betätigungsfedern (114) bzw. (116) der Schalter (106) bzw. (108) treten, sobald die Bürstenplatte ihre Endlage erreicht hat. Je nach Drehrichtung des Ankers stellt der Schalter (106) eine Verbindung zur Kontaktlasche (126) oder (132) her, und der Schalter (108) stellt eine Verbindung mit der Kontaktlasche (130) oder (128) her. Die Schalter (106) bzw. (108) kweisen einarmige Kontaktwippen auf, die abwechselnd eine elektrische Verbindung zu den genannten Kontaktlaschen herstellen.

## Ansprüche

1. Elektromotor umfassend einen Anker, einen wenigstens eine Wicklung und zwei Polschuhe aufweisenden Feldmagneten, wenigstens zwei Bürstenhalter, die auf einer konzentrisch zum Anker zu beiden Seiten einer zu den Polschuhen in etwa symmetrischen Null-Lage verschwenkbaren Bürstenhalterplatte angeordnet sind, und eine die elektrische Polung der Bürstenhalter gegenüber der Wicklung des Feldmagneten bestimmenden Schalteinrichtung zur Drehrichtungsumkehr des Elektromotors, **dadurch gekennzeichnet**, daß die Schalteinrichtung (6) gemeinsam mit der Bürstenhalterplatte (10) in Abhängigkeit von deren Lage in bezug auf die Null-Lage (50) betätigbar ist.

2. Elektromotor nach Anspruch 1, **dadurch gekennzeichnet**, daß die Schalteinrichtung (6) zwei Schaltelemente (28, 30) aufweist, welche die Bürstenhalter (16, 36) zu beiden Seiten der Null-Lage (50) der Bürstenhalterplatte (10) wechselweise mit zwei der Wicklung (3, 5) des Feldmagneten zugeordneten Anschlüssen (7, 8) elektrisch verbinden und in der Null-Lage (50) von diesen trennen.

3. Elektromotor nach Anspruch 2, **dadurch gekennzeichnet**, daß jedes Schaltelement (28, 30) einen Flachkontakt (54, 72), eine Kontaktwippe (56), ein drehbar gelagertes Federelement (62) und einen Gegenkontakt (24, 34, 44, 74) aufweist, wobei die Kontaktwippe (56) um eine Seitenkante (55) des Flachkontaktes (54) kippbar ist, das Federelement (62) die Kontaktwippe (56) klammerartig umfaßt und auf dem Flachkontakt (54) lagefixiert und das die Kontaktwippe (56) über einen Abschnitt (68) des Federelementes (62) betätigbar ist, wobei die Gegenkontakte (24, 74) bzw. (34, 44) und die Flachkontakte (54, 72) relativ zueinander verschwenkbar angeordnet sind.

4. Elektromotor nach Anspruch 3, **dadurch gekennzeichnet**, daß der Flachkontakt (54, 72) eines Schaltelementes (28, 30) jeweils mit einem der Anschlüsse ( 7, 8) der Wicklung (3, 5) des Feldmagneten verbunden ist, und daß der Gegenkontakt (24, 34) bzw. (44, 74) jeweils über ein Leiterelement (22, 42) mit einem der Bürstenhalter (16, 38) verbunden ist.

5. Elektromotor nach Anspruch 3, **dadurch gekennzeichnet**, daß die Kontaktwippe (56) des Schaltelementes zweiarmig in V-Form ausgebildet ist und einen auf dem Flachkontakt (54) abstützenden U-förmig ausgebildeten Auflagereicht (57) aufweist, der zur Führung der Kontaktwippe (56) sich zumindest abschnittsweise seitlich entlang des Flachkontaktes (54) erstreckt.

6. Elektromotor nach Anspruch 3, **dadurch gekennzeichnet,** daß jeweils ein Abschnitt der Gegenkontakte als von der Kontaktwippe (178) beschleifbares Widerstandselement (164, 166) ausgebildet ist, dessen zwischen Leiterelement (160, 162) und Kontaktwippe (176) wirksame Länge durch Schwenken der Bürstenhalterplatte (150) veränderbar ist, wobei bei voller Ausschwenkung der Bürstenhalterplatte (150) die Kontaktwippe (178) entweder mit dem Leiterelement (160) oder mit dem Leiterelement (162) direkt verbunden ist.

7. Elektromotor nach Anspruch 6, **dadurch gekennzeichnet,** daß jeweils zwischen dem Leiterelement (160, 162) und dem zugeordneten Bürstenhalter (152, 154) ein die Motorleistung beeinflussendes Steuerelement wie Triac angeordnet ist, wobei das Widerstandselement (164, 166) jeweils im Steuerstromkreis des Steuerelementes angeordnet ist.

FIG.1

FIG.2

FIG.6

**FIG.3**

**FIG.4**

**FIG.5**

Fig. 7